# EUROPEAN PATENT SPECIFICATION

(11) **EP 4 738 506 B1**
(45) Date of publication and mention of the grant of the patent: **23.09.2026**
(21) Application number: 25208789.5
(22) Date of filing: 15.10.2025
(51) Int. Cl.: H01M 10/0525, H01M 10/0587, H01M 50/528, H01M 50/533, H01M 50/536, H01M 50/538, H01M 50/586, H01M 50/59

(54) **SECONDARY BATTERY, BATTERY ASSEMBLY, AND ELECTRONIC DEVICE**
SEKUNDÄRBATTERIE, BATTERIEANORDNUNG UND ELEKTRONISCHE VORRICHTUNG
BATTERIE SECONDAIRE, ENSEMBLE BATTERIE ET DISPOSITIF ÉLECTRONIQUE

(30) Priority: 21.10.2024 CN 202422543397 U
(43) Date of publication of application: 06.05.2026
(73) Proprietor: AESC Japan Ltd., Yokohama-shi, Kanagawa 220-0012 (JP)
(72) Inventor: Zhang, Wenjing, Jiangyin City, Wuxi City 214443 (CN)
(74) Representative: Becker, Eberhard

(56) References cited:
- EP-A1- 4 443 638
- US-A1- 2019 393 474
- US-A1- 2023 275 330

## Description

### BACKGROUND

### Technical Field

The disclosure relates to a secondary battery, a battery assembly, and an electronic device.

### Related Art

In a field of new energy power batteries, a secondary battery has more and more widespread applications. For example, the secondary battery (such as a lithium-ion battery) may be applied to an electronic device such as a vehicle, energy storage, a mobile phone, a tablet, a wearable device, a power bank, an electronic cigarette, a digital product, an electric tool, a power device, an energy storage device. One type of the secondary battery is a cylindrical battery, which includes a shell and an electrode assembly. The electrode assembly includes a positive electrode sheet, a first separator, a negative electrode sheet, and a second separator, which are stacked in sequence, wound into an electrode assembly, and then packaged in the shell. However, existing secondary batteries as those known from US 2023/275330 A1, US 2019/393474 A1 and EP 4 443 638 A1 need further improved in certain aspects.

### SUMMARY

In view of the problems existing in the related art, a purpose of the disclosure is to provide a secondary battery, a battery assembly, and an electronic device, which may at least avoid damaging a separator during a manufacturing process.

To achieve the aforementioned purpose, embodiments of the disclosure provide a secondary battery. The secondary battery includes an electrode assembly including a negative electrode sheet, a positive electrode sheet, and a separator set between the negative electrode sheet and the positive electrode sheet. The negative electrode sheet includes a negative electrode current collector and a negative electrode active material layer. The negative electrode current collector includes a negative electrode coating area covered by the negative electrode active material layer, and a negative electrode uncoating area not covered by the negative electrode active material layer. A first direction is from the negative electrode coating area to the negative electrode uncoating area. The separator includes a first separator end in the first direction. Along the first direction, the negative electrode uncoating area includes a negative electrode tab and a negative electrode connecting area connected between the negative electrode tab and the negative electrode coating area. The negative electrode tab includes a negative electrode tab body and a negative electrode tab transition portion connected between the negative electrode connecting area and the negative electrode tab body. The negative electrode tab transition portion includes a first negative electrode tab transition end point connected to the negative electrode connecting area. The first negative electrode tab transition end point is a position where a tangent of the negative electrode tab transition portion intersects with an extension direction of the negative electrode connecting area. A range of a distance by which the first negative electrode tab transition end point exceeds the first separator end in the first direction is 0.5mm to 2mm.

In some embodiments, the negative electrode active material layer includes a first negative electrode end in the first direction. A range of a distance by which the first negative electrode tab transition end point exceeds the first negative electrode end in the first direction is 1.5mm to 3mm.

In some embodiments, the positive electrode sheet includes a positive electrode current collector and a positive electrode active material layer. The positive electrode active material layer includes a first positive electrode end in the first direction. A distance by which the first negative electrode end exceeds the first positive electrode end in the first direction is 1.0mm to 1.5mm.

In some embodiments, the positive electrode sheet includes a positive electrode current collector and a positive electrode active material layer. The positive electrode current collector includes a positive electrode coating area covered by the positive electrode active material layer and a positive electrode uncoating area not covered by the positive electrode active material layer. A second direction is from the positive electrode coating area to the positive electrode uncoating area. The second direction is opposite to the first direction. Along the second direction, the positive electrode uncoating area includes a positive electrode tab and a positive electrode connecting area connected between the positive electrode tab and the positive electrode coating area. The positive electrode tab includes a positive electrode tab body and a positive electrode tab transition portion connected between the positive electrode connecting area and the positive electrode tab body. The positive electrode tab transition portion includes a first positive electrode tab transition end point connected to the positive electrode connecting area. The first positive electrode tab transition end point is a position where a tangent of the positive electrode tab transition portion intersects with an extension direction of the positive electrode connecting area. The electrode assembly further includes an insulating layer. The insulating layer covers the positive electrode connecting area. A width of the insulating layer in the second direction is 0.5mm to 2.5mm.

In some embodiments, the negative electrode active material layer includes a second negative electrode end in the second direction. The insulating layer includes a first insulating end in the first direction. A range of a distance by which the second negative electrode end exceeds the first insulating end in the second direction is 0.5mm to 1mm.

In some embodiments, the insulating layer includes a second insulating layer end in the second direction. A range of a distance by which the second insulating layer end exceeds the second negative electrode end in the second direction is 0.5mm to 1mm.

In some embodiments, the negative electrode active material layer includes a first negative electrode end in the first direction. A range of a distance by which the first separator end exceeds the first negative electrode end in the first direction is 0.5mm to 1.5mm.

In some embodiments, the secondary battery further includes a shell configured to accommodate the electrode assembly. The shell includes a peripheral side wall and an end wall connected to one end of the peripheral side wall. Another end of the peripheral side wall has an opening. A pressure-welding portion protruding inward is formed at the peripheral side wall adjacent to the opening. The electrode assembly is located between the end wall and the pressure-welding portion. The negative electrode tab faces toward the opening and is connected to the shell through a negative electrode current collecting plate. A welding position of the negative electrode current collecting plate and the peripheral side wall is located on a side of the pressure-welding portion facing toward the electrode assembly.

Beneficial technical effects of the disclosure are shown as follows.

The technical solution of the disclosure, by setting the range of the distance by which the first negative electrode tab transition end point of the negative electrode sheet exceeds the first negative electrode end to be 0.5mm to 2mm, may avoid damaging the separator during the manufacturing process, and also may not waste too much space, while ensuring that the negative electrode current collector does not produce undesired deformation. For example, since the negative electrode tab body of the negative electrode current collector is welded with the negative electrode current collecting plate, there is a high risk of burning the separator during the welding process. The technical solution of the disclosure may avoid burning the separator during the welding process, and also may not waste too much space while ensuring that the negative electrode current collector does not produce undesired deformation.

### BRIEF DESCRIPTION OF THE DRAWINGS

In order to more clearly illustrate the technical solutions in the embodiments of the disclosure or the related art, the following briefly introduces the drawings required for use in the description of the embodiments or the related art. Obviously, the drawings in the following description are some embodiments of the disclosure. For those skilled in the art, other drawings may also be obtained based on these drawings without creation.
FIG. 1 is a schematic view when an electronic device is a vehicle according to an embodiment of the disclosure.
FIG. 2 is a perspective view of a secondary battery according to an embodiment of the disclosure.
FIG. 3 is a cross-sectional view of a secondary battery according to an embodiment of the disclosure.
FIG. 4 is a cross-sectional view of an electrode assembly according to some embodiments.
FIG. 5A is a schematic cross-sectional view of a negative electrode sheet at a region A1 in FIG. 4.
FIG. 5B is a schematic cross-sectional view of a positive electrode sheet at a region A2 in FIG. 4.
FIG. 6A is a schematic cross-sectional view of a size of a negative electrode sheet of an electrode assembly according to some embodiments.
FIG. 6B is a schematic cross-sectional view of a size of a negative electrode sheet of an electrode assembly according to some embodiments.
FIG. 6C is a schematic view of a relationship between a positive electrode sheet a negative electrode sheet of the electrode assembly according to some embodiments.

### DESCRIPTION OF THE EMBODIMENTS

The embodiments of the disclosure are described in detail below. Throughout the specification of the disclosure, the same or similar components and components having the same or similar functions are represented by similar reference numerals. The embodiments described herein with respect to the drawings are illustrative, diagrammatic, and are provided for a basic understanding of the disclosure. The embodiments of the disclosure should not be construed as limiting the scope of the appended claims.

As used herein, terms such as "substantially", "basically", "essentially", and "approximately" are used to describe and account for small variations. When used in conjunction with an event or circumstance, the terms may refer to instances in which the event or circumstance occurs exactly as well as instances in which the event or circumstance occurs very approximately.

In this specification, unless specifically designated or limited otherwise, relative terms such as "central", "longitudinal", "lateral", "front", "rear", "right", "left", "internal", "external", "lower", "higher", "horizontal", "vertical", "above", "below", "upper", "lower", "top", "bottom", and derivative terms (such as "horizontally", "downwardly", and "upwardly") should be interpreted as referring to the orientation described in the discussion or depicted in the drawings. These relative terms are used merely for descriptive convenience and do not require that the disclosure be constructed or operated in a particular orientation.

For ease of description, "first", "second", and "third" may be used herein to distinguish different components of a figure or series of figures. "First", "second", and "third" are not intended to describe corresponding components. Additionally, in the situation with no conflict, the embodiments of the disclosure and the features in the embodiments may be combined with each other. The disclosure is described in detail below with reference to the drawings and in conjunction with embodiments.

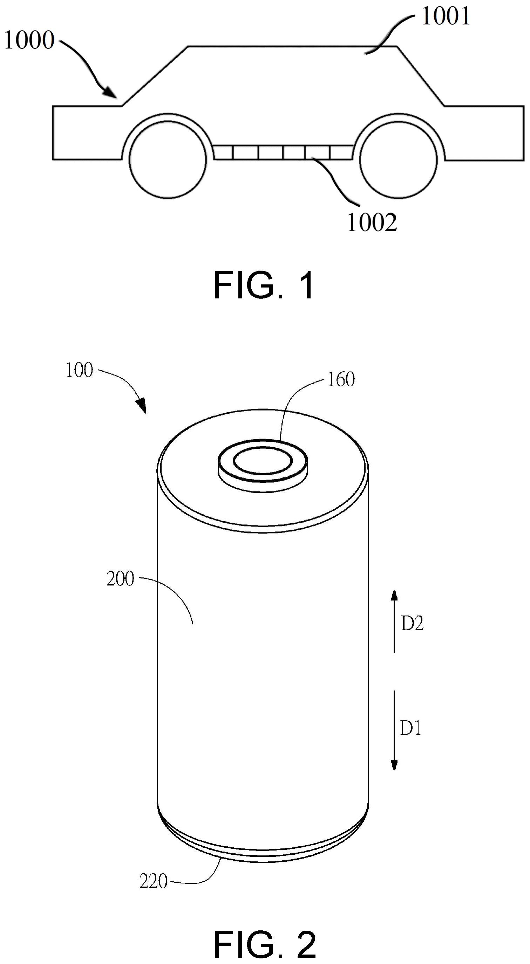

The disclosure provides an electronic device 1000. For convenience of description, the following embodiments are described by taking the electronic device 1000 as a vehicle as an example. Referring to FIG. 1, a battery assembly 1002 is disposed inside the vehicle. The battery assembly 1002 may be disposed at a bottom or head or tail of a vehicle body 1001. The battery assembly 1002 may be used for power supply of the vehicle. For example, the battery assembly 1002 may serve as an operating power source of the vehicle. A working part of the electronic device 1000 is electrically connected to the battery assembly 1002 to obtain electrical energy support. The vehicle may be a fuel vehicle, a gas vehicle, or a new energy vehicle. The new energy vehicle may be a pure electric vehicle, a hybrid vehicle, or an extended-range vehicle, but is not limited thereto. The working part is a vehicle body. The battery assembly 1002 is disposed at a bottom of the vehicle body, and provides electrical energy support for driving the vehicle or operating the electrical components of the vehicle. However, in some other embodiments, the electronic device 1000 may also be a mobile phone, a portable device, a laptop computer, a ship, a spacecraft, an electric toy, and an electric tool. The spacecraft includes an aircraft, a rocket, a space shuttle, and a spaceship. The working part may be a unit component obtaining electrical energy from the battery assembly 1002 and performing corresponding work, such as a blade rotation unit of a fan, and a dust suction working unit of a vacuum cleaner. The electric toy includes fixed or mobile electric toys, for example, a game machine, an electric car toy, an electric ship toy, and an electric airplane toys. The electric tool includes a metal cutting electric tool, a grinding electric tool, an assembly electric tool, and a railway electric tool, for example, an electric drill, an electric grinder, an electric wrench, an electric screwdriver, an electric hammer, an impact drill, a concrete vibrator, and an electric planer. The embodiments of the disclosure do not impose special restrictions on the aforementioned electronic device 1000.

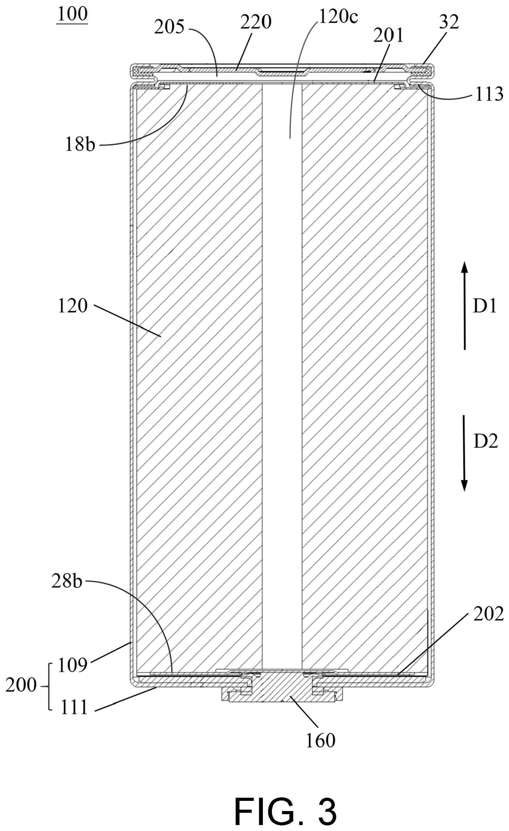

The battery assembly 1002 may include multiple secondary batteries (for example, a secondary battery 100 in FIG. 2) and a shell accommodating the secondary batteries. In the following description, the secondary battery is described as an example of a cylindrical battery. FIG. 2 is a perspective view of the secondary battery 100 according to an embodiment of the disclosure. FIG. 3 is a cross-sectional view of the secondary battery 100 according to an embodiment of the disclosure.

Referring to FIG. 2 and FIG. 3 together, the secondary battery 100 is a cylindrical battery. The secondary battery 100 may include an electrode assembly 120, an electrolyte, a shell 200, and a cover plate 220. The shell 200 includes a peripheral side wall 109 and an end wall 111 connected to one end of the peripheral side wall 109. Another end of the peripheral side wall 109 opposite to the end wall 111 is provided with an opening 205. The cover plate 220 covers the opening 205. The cover plate 220 may be configured to jointly encapsulate the electrode assembly 120 and the electrolyte together with the shell 200. A material of the shell 200 may be any one of various available materials, such as copper, iron, aluminum, steel, and aluminum alloy. The shell 200 may be cylindrical and define an accommodating chamber. The electrode assembly 120 is disposed in the accommodating chamber. An outer diameter of the shell 200 may be determined according to the specific diameter size of the electrode assembly 120. For example, the outer diameter of the shell 200 may be 18mm, 21mm, and 46mm. In some embodiments, the secondary battery 100 may be a 4680 cylindrical battery (with an outer diameter of 46mm and a height of 80mm), or the secondary battery 100 may be a 4695 cylindrical battery (with an outer diameter of 46mm and a height of 95mm), or the secondary battery 100 may be a 46120 cylindrical battery (with an outer diameter of 46mm and a height of 120mm). The secondary battery is a cylindrical battery.

The electrode assembly 120 may be mainly formed by sequentially stacking and winding a positive electrode sheet, a negative electrode sheet, and a separator located between the positive electrode sheet and the negative electrode sheet (described in detail below). The wound electrode assembly 120 may have a winding center hole 120c. In some embodiments, the positive electrode sheet may include a positive electrode current collector and a positive electrode active material layer. The positive electrode active material layer is coated on a partial surface of the positive electrode current collector. A positive electrode uncoating area 28b of the positive electrode current collector that is not covered by the positive electrode coating area may be used to form a positive electrode tab. The negative electrode sheet may include a negative electrode current collector and a negative electrode active material layer. The negative electrode active material layer is coated on a partial surface of the negative electrode current collector. A negative electrode uncoating area 18b of the negative electrode current collector that is not covered by the negative electrode coating area may be used to form a negative electrode tab.

A pressure-welding portion 113 (which may also be called a rolling groove) protruding inward is formed at a peripheral side wall of the shell 200 adjacent to the opening 205. The electrode assembly 120 is disposed between the end wall 111 and the pressure-welding portion 113, and the pressure-welding portion 113 may restrict a movement of the electrode assembly 120 in a height direction and a reverse direction between the end wall 111 and the pressure-welding portion 113. An end portion of the peripheral side wall 109 of the shell 200 on the opening 205 side may be configured as a curling portion 32. The curling portion 32 extends inward along a radial direction of the shell 200. The curling portion 32 and the pressure-welding portion 113 are spaced apart in the height direction. The pressure-welding portion 113 and the curling portion 32 may jointly clamp the cover plate 220. The cover plate 220 is electrically insulated from the shell 200.

A negative electrode uncoating area 18b of the electrode assembly 120 faces toward the opening 205, and may be electrically connected to the shell 200 through a negative electrode current collecting plate 201 located between the cover plate 220 and the electrode assembly 120, so that the shell 200 is negatively charged. The negative electrode current collecting plate 201 may be welded to the shell 200 by laser welding. Specifically, a welding position of the negative electrode current collecting plate 201 and the peripheral side wall 109 of the shell 200 is located on a side of the pressure-welding portion 113 facing toward the electrode assembly 120.

The secondary battery 100 may further include an electrode pole 160. The electrode pole 160 passes through the end wall 111 and is insulated from the end wall 111. The electrode pole 160 may be electrically connected to the positive electrode uncoating area 28b of the positive electrode sheet through a positive electrode current collecting plate 202 located between the electrode pole 160 and the electrode assembly 120, so that the electrode pole 160 is positively charged. In some embodiments, the electrode pole 160 may be welded to the positive electrode current collecting plate 202 by laser penetration welding.

In an example of the cylindrical battery of the disclosure, a manufacturing method of the secondary battery 100 of the disclosure includes the following steps.

Winding: A winding structure is formed by stacking and winding the negative electrode sheet, the separator, and the positive electrode sheet. The negative electrode uncoating area 18b of the negative electrode sheet and the positive electrode uncoating area 28b of the positive electrode sheet are used as a positive electrode tab and a negative electrode tab. In addition, the positive electrode uncoating area 28b and the negative electrode uncoating area 18b are bent along the radial direction of the electrode assembly 120.

Welding of current collecting plate and electrode assembly: The positive electrode current collecting plate 202 and the negative electrode current collecting plate 201 are respectively welded and connected to surface regions of the bent positive electrode uncoating area 28b and negative electrode uncoating area 18b.

Shell insertion: The electrode assembly 120 that has been welded to the negative electrode current collecting plate 201 and the positive electrode current collecting plate 202 is installed into the shell 200 through the opening 205. An installing method of the electrode assembly 120 in this step is not limited, for example, manual installation or mechanical arm installation.

The electrode pole 160 is installed.

Electrolyte injection: An injection method of the electrolyte is not limited, which may be selected to inject at the opening 205. In this embodiment, the electrolyte is injected at the opening 205, which reduces a process of opening an injection hole in the end wall 111. The existing opening 205 may be directly utilized for injection, simplifying the process and reducing costs.

Sealing: The cover plate 220 is sealingly installed on the opening 205. There are various sealing methods, which are not limited. In some embodiments, a peripheral side of the shell 200 is first rolled to form a pressure-welding portion 113 that is recessed toward a center of the shell 200 to limit the movement of the electrode assembly 120 in the height direction. Next, a mechanical sealing process is used to upset-seal the cover plate 220 to form a curling portion 32, thereby sealingly installing the cover plate 220 on the opening 205 of the shell 200. This process is mature, low-cost, and highly efficient.

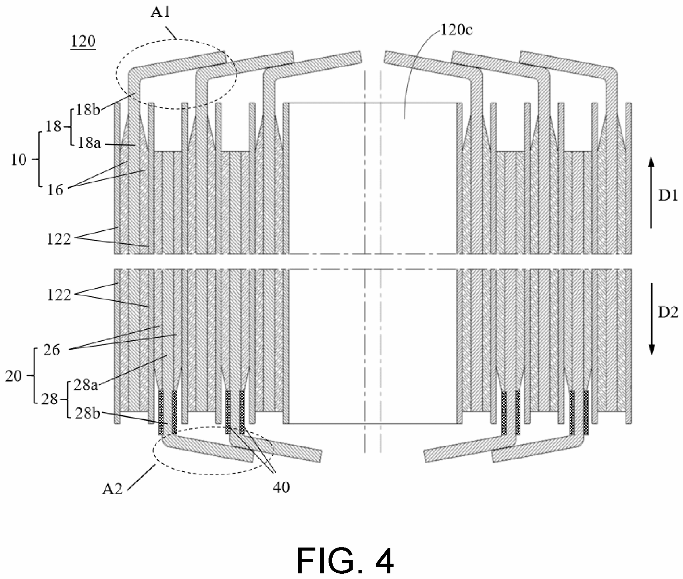

FIG. 4 is a cross-sectional view of the electrode assembly 120 according to some embodiments. Referring to FIG. 4, the electrode assembly 120 is mainly formed by winding the negative electrode sheet 10 and the positive electrode sheet 20, and a separator 122 is disposed between the negative electrode sheet 10 and the positive electrode sheet 20. The electrolyte may be filled between the negative electrode sheet 10, the positive electrode sheet 20, and the separator 122.

The negative electrode sheet 10 may include a negative electrode current collector 18 and a negative electrode active material layer 16. Partial surfaces of opposite surfaces of the negative electrode current collector 18 along a thickness direction thereof are covered by the negative electrode active material layer 16, so that the negative electrode current collector 18 includes a negative electrode coating area 18a covered by the negative electrode active material layer 16 and a negative electrode uncoating area 18b not covered by the negative electrode active material layer 16. The positive electrode sheet 20 includes a positive electrode current collector 28 and a positive electrode active material layer 26, and at least partial surfaces of opposite surfaces of the positive electrode current collector 28 along the thickness direction thereof are covered by the positive electrode active material layer 26, so that the positive electrode current collector 28 includes a positive electrode coating area 28a covered by the positive electrode active material layer 26 and a positive electrode uncoating area 28b not covered by the positive electrode active material layer 26. A direction from the negative electrode coating area 18a to the negative electrode uncoating area 18b is a first direction D1. An opposite direction of the first direction D1 is a second direction D2. The negative electrode uncoating area 18b of the negative electrode current collector 18 may be used to form a negative electrode tab. The positive electrode uncoating area 28b of the positive electrode current collector 28 may be used to form a positive electrode tab.

Taking a lithium-ion battery as an example, a material of the negative electrode current collector 18 may be, for example, copper. The negative electrode current collector 18 is a copper foil. A negative electrode active material of the negative electrode active material layer 16 may be carbon or silicon. A material of the positive electrode current collector 28 may be, for example, aluminum. A positive electrode active material of the positive electrode active material layer 26 may be lithium cobalt oxide, lithium iron phosphate, ternary lithium, or lithium manganese oxide. A material of the separator 122 may be PP (polypropylene) or PE (polyethylene).

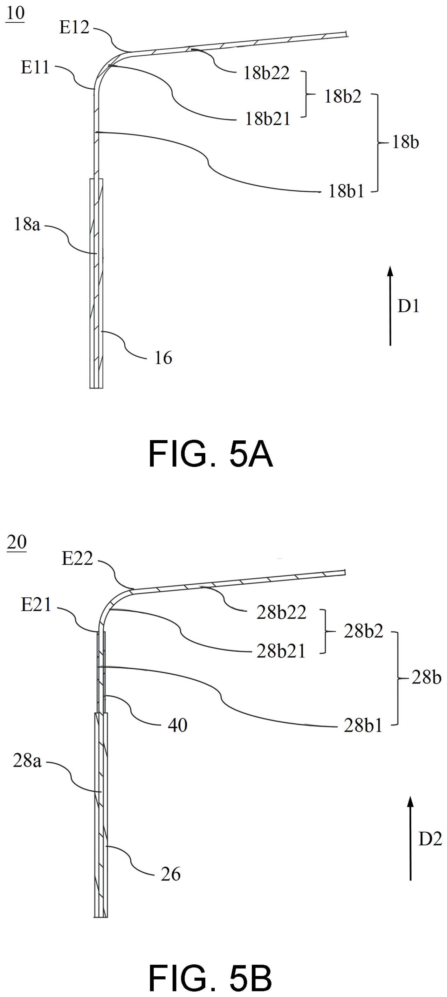

FIG. 5Ais a schematic cross-sectional view of the negative electrode sheet 10 at a region A1 in FIG. 4. Referring to FIG. 5A, the negative electrode uncoating area 18b includes a negative electrode tab 18b2 and a negative electrode connecting area 18b1 connected between the negative electrode tab 18b2 and the negative electrode coating area 18a. The negative electrode tab 18b2 includes a negative electrode tab body 18b22 and a negative electrode tab transition portion 18b21 connected between the negative electrode connecting area 18b1 and the negative electrode tab body 18b22. In the cross-sectional view of FIG. 5A, the negative electrode tab transition portion 18b21 has a curved extension path, and the negative electrode tab body 18b22 has a linear extension path. An extension path of the negative electrode connecting area 18b1 is a straight line along the first direction D1.

The negative electrode tab transition portion 18b21 includes a first negative electrode tab transition end point E11 connected to the negative electrode connecting area 18b1. The first negative electrode tab transition end point E11 is a position where a tangent of the negative electrode tab transition portion 18b21 intersects with an extension direction of the negative electrode connecting area 18b1. The negative electrode tab transition portion 18b21 further includes a second negative electrode tab transition end point E12. The second negative electrode tab transition end point E12 is a position where a tangent of the negative electrode tab transition portion 18b21 intersects with an extension direction of the negative electrode tab body 18b22.

FIG. 5B is a schematic cross-sectional view of the positive electrode sheet 20 at a region A2 in FIG. 4. Referring to FIG. 5B, the positive electrode uncoating area 28b includes a positive electrode tab 28b2 and a positive electrode connecting area 28b1 connected between the positive electrode tab 28b2 and the positive electrode coating area 28a. The positive electrode tab 28b2 includes a positive electrode tab body 28b22 and a positive electrode tab transition portion 28b21 connected between the positive electrode connecting area 28b1 and the positive electrode tab body 28b22. In the cross-sectional view of FIG. 5B, the positive electrode tab transition portion 28b21 has a curved extension path, and the positive electrode tab body 28b22 has a linear extension path. An extension path of the positive electrode connecting area 28b1 is a straight line along the second direction D2.

The positive electrode tab transition portion 28b21 includes a first positive electrode tab transition end point E21 connected to the positive electrode connecting area 28b1, and the first positive electrode tab transition end point E21 is a position where a tangent of the positive electrode tab transition portion 28b21 intersects with an extension direction of the positive electrode connecting area 28b1. The positive electrode tab transition portion 28b21 further includes a second positive electrode tab transition end point E22, and the second positive electrode tab transition end point E22 is a position where a tangent of the positive electrode tab transition portion 28b21 intersects with an extension direction of the positive electrode tab body 28b22. The insulating layer 40 covers the positive electrode connecting area 28b1. By disposing the insulating layer 40, a possibility of contact between the negative electrode sheet 10 and the positive electrode sheet 20 may be minimized. The insulating layer 40 may be disposed on both side surfaces of the positive electrode uncoating area 28b. The insulating layer 40 may effectively prevent electrical contact between the negative electrode sheet 10 and the positive electrode sheet 20.

In some embodiments, the insulating layer 40 is mainly composed of boehmite and polyvinylidene difluoride (PVDF). A proportion of boehmite is 80%. A proportion of PVDF is 20%. In some embodiments, the insulating layer is a ceramic material layer. A thickness of the insulating layer 40 may be 1.5mm to 2.5mm, for example, 1.5mm, 1.7mm, 2mm, 2.1mm, 2.3mm, or 2.5mm. Setting a thickness range of the insulating layer 40, a coating thickness of the insulating layer 40 being too thin may be avoided, which would make it difficult to obtain the required electrical insulation and supporting strength. Meanwhile, the thickness of the insulating layer 40 being too thick may be avoided, which would lead to possibilities of longer curing time of the coating layer and increased thickness of the overall structure.

In some embodiments, the insulating layer 40 includes a color developer. Due to a coloring effect , the color developer distinguishes whether the side coated with the insulating layer 40 is a front side or a back side of the positive electrode sheet 20, including but not limited to distinguishing situations such as the surface density of the front side and the back side of the positive electrode sheet 20. The main component of the color developer may be bismuth vanadate, which appears yellow in color.

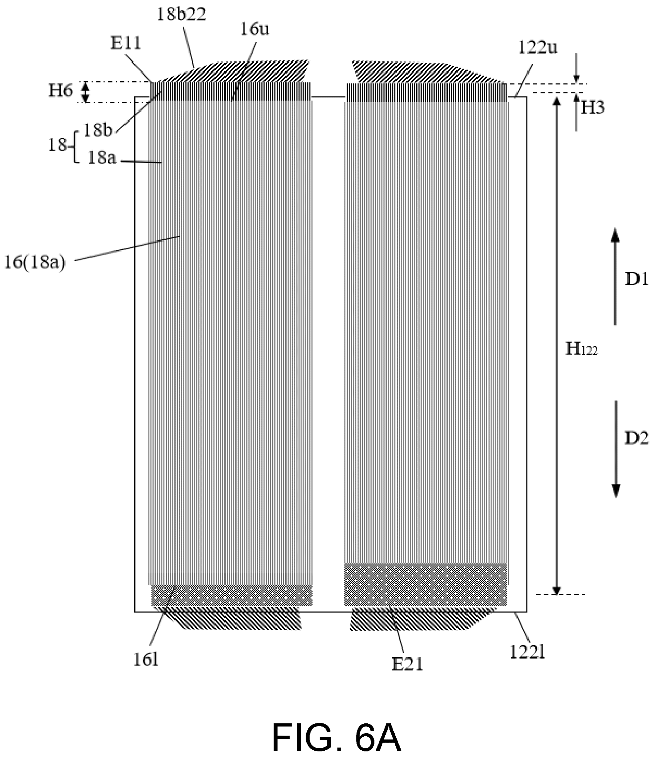

FIG. 6A is a schematic cross-sectional view of a size of a negative electrode sheet of an electrode assembly according to some embodiments. In FIG. 6A, an upper end of the separator 122 in the first direction D1 is shown, which is called a first separator end 122u, and the separator 122 has a lower end in the second direction D2, which is called a second separator end 122l. Moreover, a height of the separator 122 in the cross-section is H₁₂₂.

In some embodiments, a range of a distance H3 between the first negative electrode tab transition end point E11 and the first separator end 122u of the separator 122 in the first direction D1 is 0.5mm to 2mm. An extreme case of a relative position relationship between the first negative electrode tab transition end point E11 and the first separator end 122u of the separator 122 is 0 (that is, H3 is 0), but since the negative electrode tab body 18b22 may be welded to the negative electrode current collecting plate, a risk of burning the separator 122 during the welding process is relatively high. If the distance H3 is too large, too much space may be wasted, which may cause the negative electrode current collector to collapse due to insufficient support. The technical solution of the disclosure, by setting the range of the distance H3 to be 0.5mm to 2mm, may avoid burning the separator 122 during the welding process, and may not waste too much space while ensuring that the negative electrode current collector does not produce undesired deformation.

In addition, the negative electrode active material layer 16 has an upper end in the first direction D1, which is called a first negative electrode end 16u, and the negative electrode active material layer 16 has a lower end in the second direction D2, which is called a second negative electrode end 16l. In some embodiments, a distance by which the first negative electrode tab transition end point E11 exceeds the first negative electrode end 16u in the first direction D1 is H6, and a range of the distance H6 may be 1.5mm to 3mm. This value range of the distance H6 may avoid the heat during the process of welding the negative electrode tab body 18b22 and the negative electrode current collecting plate from affecting the negative electrode active material layer 16, and may not waste too much space.

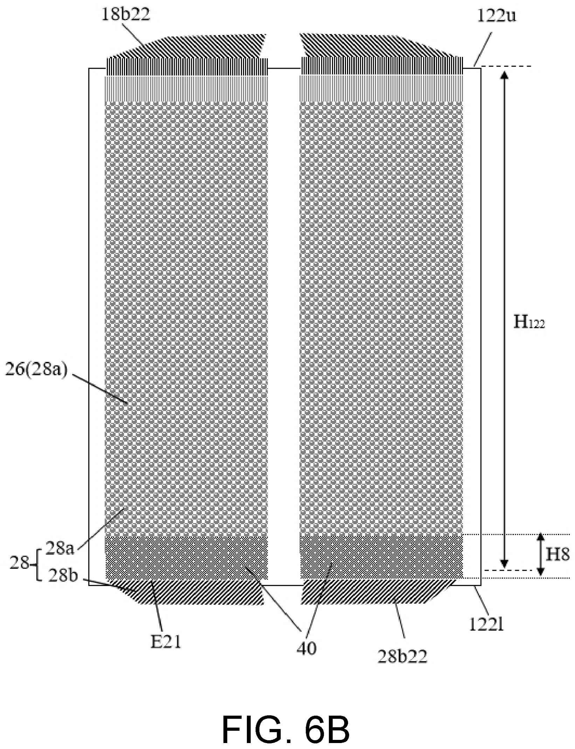

FIG. 6B shows a schematic cross-sectional view of a size of the negative electrode sheet 20 of an electrode assembly according to some embodiments. In some embodiments, referring to FIG. 4 to FIG. 6B, the insulating layer 40 has a width H8 in the second direction D2. A range of the width H8 may be 0.5mm to 2.5mm. The insulating layer 40 within this value range may provide good supporting effect while providing good electrical isolation effect. If the width H8 is greater than 2.5mm, too much internal space of the battery may be wasted. In preferred embodiments, the width H8 of the insulating layer 40 is 2mm to 2.5mm. In some embodiments, the insulating layer 40 may be adjacent to the first positive electrode tab transition end point E21, that is, the positive electrode tab 28b2 starts to bend at the lower end of the insulating layer 40.

In some embodiments, the insulating layer 40 may not be disposed on the positive electrode uncoating area 28b. In such embodiments, a distance between the first positive electrode tab transition end point E21 and the second separator end 122l of the separator 122 may be 0.5mm to 2mm (similar to the case on the negative electrode side).

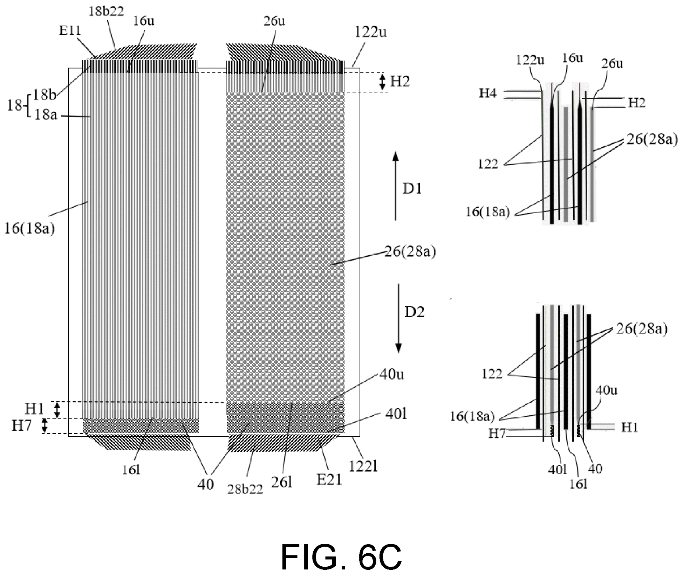

FIG. 6C is a schematic view of a relationship between a positive electrode sheet a negative electrode sheet of the electrode assembly according to some embodiments. In some embodiments, referring to FIG. 6C, in the first direction D1, a distance by which the first separator end 122u (the upper end) of the separator 122 exceeds the first negative electrode end 16u (the upper end) of the negative electrode active material layer 16 is H4. In some embodiments, a range of the distance H4 is 0.5mm to 1.5mm. Preferably, the distance H4 is about 1mm. The upper end of the separator exceeding the negative electrode active material layer may prevent negative electrode misalignment and other situations under a vibration condition, improving safety of the battery.

The positive electrode active material layer 26 has an upper end in the first direction D1, which is called a first positive electrode end 26u, and the negative electrode active material layer 16 has a lower end in the second direction D2, which is called a second positive electrode end 26l. In the first direction D1, a distance by which the first negative electrode end 16u (the upper end) of the negative electrode active material layer 16 exceeds the first positive electrode end 26u (the upper end) of the positive electrode active material layer 26 of the positive electrode sheet 20 is H2. In some embodiments, the distance H2 is 1.0mm to 1.5mm, which may avoid lithium plating and may not occupy too much internal space of the battery.

The insulating layer 40 has an upper end in the first direction D1, which is called the first insulating end 40u, and the insulating layer 40 has a lower end in the second direction D2, which is called a second insulating layer end 40l. In some embodiments, in the second direction D2, a distance H7 by which the second insulating layer end 40l (the lower end) of the insulating layer 40 exceeds the second negative electrode end 16l (the lower end) of the negative electrode active material layer 16 is 0.5mm to 1mm, to ensure electrical isolation and not occupy too much internal space of the battery.

In some embodiments, in the second direction D2, a distance by which the second negative electrode end 16l (the lower end) of the negative electrode active material layer 16 exceeds the first insulating end 40u (the upper end) of the insulating layer 40 is H1. A range of the distance H1 is 0.5mm to 1mm, which may ensure that the insulating layer 40 isolates the lower end of the negative electrode active material layer 16 from the positive electrode sheet, ensure safety, and may not occupy too much internal space of the battery.

## Claims

1. A secondary battery (100), comprising:
an electrode assembly (120), comprising a negative electrode sheet (10), a positive electrode sheet (20), and a separator (122) disposed between the negative electrode sheet (10) and the positive electrode sheet (20), wherein the negative electrode sheet (10) comprises a negative electrode current collector (18) and a negative electrode active material layer (16), the negative electrode current collector (18) comprises a negative electrode coating area (18a) covered by the negative electrode active material layer (16) and a negative electrode uncoating area (18b) not covered by the negative electrode active material layer (16), a first direction (D1) is from the negative electrode coating area (18a) to the negative electrode uncoating area (18b), and the separator (122) comprises a first separator end (122u) in the first direction (D1),
along the first direction (D1), the negative electrode uncoating area (18b) comprising a negative electrode tab (18b2) and a negative electrode connecting area (18b1) connected between the negative electrode tab (18b2) and the negative electrode coating area (18a), the negative electrode tab (18b2) comprising a negative electrode tab body (18b22) and a negative electrode tab transition portion (18b21) connected between the negative electrode connecting area (18b1) and the negative electrode tab body (18b22), the negative electrode tab transition portion (18b21) comprising a first negative electrode tab transition end point (E11) connected to the negative electrode connecting area (18b1), and the first negative electrode tab transition end point (E11) being a position where a tangent of the negative electrode tab transition portion (18b21) intersects with an extension direction of the negative electrode connecting area (18b1), and
wherein a range of a distance (H3) by which the first negative electrode tab transition end point (E11) exceeds the first separator end (122u) in the first direction (D1) is 0.5mm to 2mm.

2. The secondary battery (100) according to claim 1, wherein the negative electrode active material layer (16) comprises a first negative electrode end (16u) in the first direction (D1), and a range of a distance (H6) by which the first negative electrode tab transition end point (E11) exceeds the first negative electrode end (16u) in the first direction (D1) is 1.5mm to 3mm.

3. The secondary battery (100) according to claim 2, wherein the positive electrode sheet (20) comprises a positive electrode current collector (28) and a positive electrode active material layer (26), the positive electrode active material layer (26) comprises a first positive electrode end (26u) in the first direction (D1), and a distance (H2) by which the first negative electrode end (16u) exceeds the first positive electrode end (26u) in the first direction (D1) is 1.0mm to 1.5mm.

4. The secondary battery (100) according to claim 1, wherein the positive electrode sheet (20) comprises a positive electrode current collector (28) and a positive electrode active material layer (26), the positive electrode current collector (28) comprises a positive electrode coating area (28a) covered by the positive electrode active material layer (26) and a positive electrode uncoating area (28b) not covered by the positive electrode active material layer (26), a second direction (D2) is from the positive electrode coating area (28a) to the positive electrode uncoating area (28b), and the second direction (D2) is opposite to the first direction (D1);
along the second direction (D2), the positive electrode uncoating area (28b) comprises a positive electrode tab (28b2) and a positive electrode connecting area (28b1) connected between the positive electrode tab (28b2) and the positive electrode coating area (28a), the positive electrode tab (28b2) comprises a positive electrode tab body (28b22) and a positive electrode tab transition portion (28b21) connected between the positive electrode connecting area (28b1) and the positive electrode tab body (28b22), the positive electrode tab transition portion (28b21) comprises a first positive electrode tab transition end point (E21) connected to the positive electrode connecting area (28b1), the first positive electrode tab transition end point (E21) is a position where a tangent of the positive electrode tab transition portion (28b21) intersects with an extending direction of the positive electrode connecting area (28b1); and
the electrode assembly (120) further comprises an insulating layer (40), the insulating layer (40) covers the positive electrode connecting area (28b1), and a width (H8) of the insulating layer (40) in the second direction (D2) is 0.5mm to 2.5mm.

5. The secondary battery (100) according to claim 4, wherein the negative electrode active material layer (16) comprises a second negative electrode end (16l) in the second direction (D2), the insulating layer (40) comprises a first insulating end (40u) in the first direction (D1), and a range of a distance (H1) by which the second negative electrode end (16l) exceeds the first insulating end (40u) in the second direction (D2) is 0.5mm to 1mm.

6. The secondary battery (100) according to claim 5, wherein the insulating layer (40) comprises a second insulating layer end (40l) in the second direction (D2), and a range of a distance (H7) by which the second insulating layer end (40l) exceeds the second negative electrode end (16l) in the second direction (D2) is 0.5mm to 1mm.

7. The secondary battery (100) according to claim 1, wherein the negative electrode active material layer (16) comprises a first negative electrode end (16u) in the first direction (D1), and a range of a distance (H4) by which the first separator end (122u) exceeds the first negative electrode end (16u) in the first direction (D1) is 0.5mm to 1.5mm.

8. The secondary battery (100) according to claim 4, further comprising:
a shell (200), configured to accommodate the electrode assembly (120), and comprising a peripheral side wall (109) and an end wall (111) connected to one end of the peripheral side wall (109), another end of the peripheral side wall (109) having an opening (205), a pressure-welding portion (113) protruding inward is formed at the peripheral side wall (109) adjacent to the opening (205), and the electrode assembly (120) is located between the end wall (111) and the pressure-welding portion (113),
wherein the negative electrode tab (18b2) faces toward the opening (205) and is connected to the shell (200) through a negative electrode current collecting plate (201), a welding position of the negative electrode current collecting plate (201) and the peripheral side wall (109) is located on a side of the pressure-welding portion (113) facing toward the electrode assembly (120); and
the secondary battery (100) is a cylindrical battery.

9. A battery assembly (1002), comprising the secondary battery (100) according to any one of claims 1-8.

10. An electronic device (1000), comprising the battery assembly (1002) according to claim 9.

## Patentansprüche

1. Sekundärbatterie (100), umfassend:
eine Elektrodenanordnung (120), umfassend eine Negativelektrodenfolie (10), eine Positivelektrodenfolie (20) und einen Separator (122), der zwischen der Negativelektrodenfolie (10) und der Positivelektrodenfolie (20) angeordnet ist, wobei die Negativelektrodenfolie (10) einen Negativelektroden-Stromkollektor (18) und eine Negativelektroden-Aktivmaterialschicht (16) umfasst, wobei der Negativelektroden-Stromkollektor (18) einen mit der Negativelektroden-Aktivmaterialschicht (16) abgedeckten Negativelektroden-Beschichtungsbereich (18a) und einen nicht mit der Negativelektroden-Aktivmaterialschicht (16) abgedeckten Negativelektroden-Unbeschichtungsbereich (18b) umfasst, eine erste Richtung (D1) von dem Negativelektroden-Beschichtungsbereich (18a) zu dem Negativelektroden-Unbeschichtungsbereich (18b) verläuft, und der Separator (122) ein erstes Separatorende (122u) in der ersten Richtung (D1) aufweist,
wobei entlang der ersten Richtung (D1) der Negativelektroden-Unbeschichtungsbereich (18b) eine Negativelektrodenlasche (18b2) und einen Negativelektroden-Verbindungsbereich (18b1) umfasst, der zwischen der Negativelektrodenlasche (18b2) und dem Negativelektroden-Beschichtungsbereich (18a) verbunden ist, wobei die Negativelektrodenlasche (18b2) einen Negativelektroden-Laschenkörper (18b22) und einen Negativelektroden-Laschenübergangsabschnitt (18b21) umfasst, der zwischen dem Negativelektroden-Verbindungsbereich (18b1) und dem Negativelektroden-Laschenkörper (18b22) verbunden ist, wobei der Negativelektroden-Laschenübergangsabschnitt (18b21) einen ersten Negativelektroden-Laschenübergangs-Endpunkt (E11) umfasst, der mit dem Negativelektroden-Verbindungsbereich (18b1) verbunden ist, und der erste Negativelektroden-Laschenübergangs-Endpunkt (E11) eine Position ist, an der eine Tangente des Negativelektroden-Laschenübergangsabschnitts (18b21) eine Erstreckungsrichtung des Negativelektroden-Verbindungsbereichs (18b1) schneidet, und
wobei ein Bereich eines Abstands (H3), um den der erste Negativelektroden-Laschenübergangs-Endpunkt (E11) das erste Separatorende (122u) in der ersten Richtung (D1) überschreitet, 0,5 mm bis 2 mm beträgt.

2. Sekundärbatterie (100) nach Anspruch 1, wobei die Negativelektroden-Aktivmaterialschicht (16) ein erstes Negativelektrodenende (16u) in der ersten Richtung (D1) umfasst und ein Bereich eines Abstands (H6), um den der erste Negativelektroden-Laschenübergangs-Endpunkt (E11) das erste Negativelektrodenende (16u) in der ersten Richtung (D1) überschreitet, 1,5 mm bis 3 mm beträgt.

3. Sekundärbatterie (100) nach Anspruch 2, wobei die Positivelektrodenfolie (20) einen Positivelektroden-Stromkollektor (28) und eine Positivelektroden-Aktivmaterialschicht (26) umfasst, wobei die Positivelektroden-Aktivmaterialschicht (26) ein erstes Positivelektrodenende (26u) in der ersten Richtung (D1) umfasst und ein Abstand (H2), um den das erste Negativelektrodenende (16u) das erste Positivelektrodenende (26u) in der ersten Richtung (D1) überschreitet, 1,0 mm bis 1,5 mm beträgt.

4. Sekundärbatterie (100) nach Anspruch 1, wobei die Positivelektrodenfolie (20) einen Positivelektroden-Stromkollektor (28) und eine Positivelektroden-Aktivmaterialschicht (26) umfasst, wobei der Positivelektroden-Stromkollektor (28) einen mit der Positivelektroden-Aktivmaterialschicht (26) abgedeckten Positivelektroden-Beschichtungsbereich (28a) und einen nicht mit der Positivelektroden-Aktivmaterialschicht (26) abgedeckten Positivelektroden-Unbeschichtungsbereich (28b) umfasst, eine zweite Richtung (D2) von dem Positivelektroden-Beschichtungsbereich (28a) zu dem Positivelektroden-Unbeschichtungsbereich (28b) verläuft und die zweite Richtung (D2) der ersten Richtung (D1) entgegengesetzt ist;
wobei entlang der zweiten Richtung (D2) der Positivelektroden-Unbeschichtungsbereich (28b) eine Positivelektrodenlasche (28b2) und einen Positivelektroden-Verbindungsbereich (28b1) umfasst, der zwischen der Positivelektrodenlasche (28b2) und dem Positivelektroden-Beschichtungsbereich (28a) verbunden ist, wobei die Positivelektrodenlasche (28b2) einen Positivelektroden-Laschenkörper (28b22) und einen Positivelektroden-Laschenübergangsabschnitt (28b21) umfasst, der zwischen dem Positivelektroden-Verbindungsbereich (28b1) und dem Positivelektroden-Laschenkörper (28b22) verbunden ist, wobei der Positivelektroden-Laschenübergangsabschnitt (28b21) einen ersten Positivelektroden-Laschenübergangs-Endpunkt (E21) umfasst, der mit dem Positivelektroden-Verbindungsbereich (28b1) verbunden ist, wobei der erste Positivelektroden-Laschenübergangs-Endpunkt (E21) eine Position ist, an der eine Tangente des Positivelektroden-Laschenübergangsabschnitts (28b21) eine Erstreckungsrichtung des Positivelektroden-Verbindungsbereichs (28b1) schneidet; und
wobei die Elektrodenanordnung (120) ferner eine Isolierschicht (40) umfasst, wobei die Isolierschicht (40) den Positivelektroden-Verbindungsbereich (28b1) abdeckt und eine Breite (H8) der Isolierschicht (40) in der zweiten Richtung (D2) 0,5 mm bis 2,5 mm beträgt.

5. Sekundärbatterie (100) nach Anspruch 4, wobei die Negativelektroden-Aktivmaterialschicht (16) ein zweites Negativelektrodenende (16l) in der zweiten Richtung (D2) umfasst, die Isolierschicht (40) ein erstes Isolierende (40u) in der ersten Richtung (D1) umfasst und ein Bereich eines Abstands (H1), um den das zweite Negativelektrodenende (16l) das erste Isolierende (40u) in der zweiten Richtung (D2) überschreitet, 0,5 mm bis 1 mm beträgt.

6. Sekundärbatterie (100) nach Anspruch 5, wobei die Isolierschicht (40) ein zweites Isolierschichtende (40l) in der zweiten Richtung (D2) umfasst und ein Bereich eines Abstands (H7), um den das zweite Isolierschichtende (40l) das zweite Negativelektrodenende (16l) in der zweiten Richtung (D2) überschreitet, 0,5 mm bis 1 mm beträgt.

7. Sekundärbatterie (100) nach Anspruch 1, wobei die Negativelektroden-Aktivmaterialschicht (16) ein erstes Negativelektrodenende (16u) in der ersten Richtung (D1) umfasst und ein Bereich eines Abstands (H4), um den das erste Separatorende (122u) das erste Negativelektrodenende (16u) in der ersten Richtung (D1) überschreitet, 0,5 mm bis 1,5 mm beträgt.

8. Sekundärbatterie (100) nach Anspruch 4, ferner umfassend:
ein Gehäuse (200), das zur Aufnahme der Elektrodenanordnung (120) konfiguriert ist und eine Umfangsseitenwand (109) und eine mit einem Ende der Umfangsseitenwand (109) verbundene Stirnwand (111) umfasst, wobei ein anderes Ende der Umfangsseitenwand (109) eine Öffnung (205) aufweist, ein nach innen vorstehender Druckschweißabschnitt (113) an der Umfangsseitenwand (109) benachbart zu der Öffnung (205) gebildet ist und sich die Elektrodenanordnung (120) zwischen der Stirnwand (111) und dem Druckschweißabschnitt (113) befindet,
wobei die Negativelektrodenlasche (18b2) der Öffnung (205) zugewandt ist und über eine Negativelektroden-Stromsammelplatte (201) mit dem Gehäuse (200) verbunden ist, wobei sich eine Schweißposition der Negativelektroden-Stromsammelplatte (201) und der Umfangsseitenwand (109) auf einer der Elektrodenanordnung (120) zugewandten Seite des Druckschweißabschnitts (113) befindet; und
wobei die Sekundärbatterie (100) eine zylindrische Batterie ist.

9. Batterieanordnung (1002), umfassend die Sekundärbatterie (100) nach einem der Ansprüche 1 bis 8.

10. Elektronische Vorrichtung (1000), umfassend die Batterieanordnung (1002) nach Anspruch 9.

## Revendications

1. Batterie secondaire (100), comprenant :
un ensemble d'électrodes (120), comprenant une feuille d'électrode négative (10),
une feuille d'électrode positive (20) et un séparateur (122) disposé entre la feuille d'électrode négative (10) et la feuille d'électrode positive (20),
dans lequel la feuille d'électrode négative (10) comprend un collecteur de courant d'électrode négative (18) et une couche de matière active d'électrode négative (16), le collecteur de courant d'électrode négative (18) comprend une zone de revêtement d'électrode négative (18a) recouverte par la couche de matière active d'électrode négative (16) et une zone non revêtue d'électrode négative (18b) non revêtue par la couche de matière active d'électrode négative (16), une première direction (D1) s'étend de la zone de revêtement d'électrode négative (18a) vers la zone non revêtue d'électrode négative (18b), et le séparateur (122) comprend une première extrémité de séparateur (122u) dans la première direction (D1), le long de la première direction (D1), la zone non revêtue de l'électrode négative (18b) comprenant une languette d'électrode négative (18b2) et
une zone de connexion de l'électrode négative (18b1) reliant la languette d'électrode négative (18b2) et la zone de revêtement de l'électrode négative (18a), la languette d'électrode négative (18b2) comprenant un corps de languette d'électrode négative (18b22) et une partie de transition de languette d'électrode négative (18b21) reliant la zone de connexion de l'électrode négative (18b1) au corps de languette d'électrode négative (18b22), la partie de transition de la languette d'électrode négative (18b21) comprenant un premier point d'extrémité de transition de la languette d'électrode négative (E11) relié à la zone de connexion de l'électrode négative (18b1), et le premier point d'extrémité de transition de la languette d'électrode négative (E11) étant une position où une tangente à la partie de transition de la languette d'électrode négative (18b21) coupe la direction d'extension de la zone de connexion de l'électrode négative (18b1), et
dans laquelle la plage de la distance (H3) dont le premier point d'extrémité de transition de la languette d'électrode négative (E11) dépasse la première extrémité du séparateur (122u) dans la première direction (D1) est comprise entre 0,5 mm et 2 mm.

2. Batterie secondaire (100) selon la revendication 1, dans laquelle la couche de matière active de l'électrode négative (16) comprend une première extrémité d'électrode négative (16u) dans la première direction (D1), et la plage de la distance (H6) de laquelle le premier point d'extrémité de transition de la languette d'électrode négative (E11) dépasse la première extrémité de l'électrode négative (16u) dans la première direction (D1) est comprise entre 1,5 mm et 3 mm.

3. Batterie secondaire (100) selon la revendication 2, dans laquelle la feuille d'électrode positive (20) comprend un collecteur de courant d'électrode positive (28) et une couche de matière active d'électrode positive (26), la couche de matière active de l'électrode positive (26) comprend une première extrémité d'électrode positive (26u) dans la première direction (D1), et la distance (H2) dont la première extrémité de l'électrode négative (16u) dépasse la première extrémité de l'électrode positive (26u) dans la première direction (D1) est comprise entre 1,0 mm et 1,5 mm.

4. Batterie secondaire (100) selon la revendication 1, dans laquelle la feuille d'électrode positive (20) comprend un collecteur de courant d'électrode positive (28) et une couche de matière active d'électrode positive (26), le collecteur de courant d'électrode positive (28) comprend une zone de revêtement d'électrode positive (28a) recouverte par la couche de matière active d'électrode positive (26) et une zone non revêtue d'électrode positive (28b) non revêtue par la couche de matière active d'électrode positive (26), une deuxième direction (D2) s'étend de la zone revêtue de l'électrode positive (28a) vers la zone non revêtue de l'électrode positive (28b), et la deuxième direction (D2) est opposée à la première direction (D1) ; le long de la deuxième direction (D2), la zone non revêtue de l'électrode positive (28b) comprend une languette d'électrode positive (28b2) et une zone de connexion de l'électrode positive (28b1) reliant la languette d'électrode positive (28b2) à la zone revêtue de l'électrode positive (28a), la languette d'électrode positive (28b2) comprend un corps de languette d'électrode positive (28b22) et une partie de transition de languette d'électrode positive (28b21) reliant la zone de connexion de l'électrode positive (28b1) au corps de languette d'électrode positive (28b22), la partie de transition de la languette d'électrode positive (28b21) comprend un premier point d'extrémité de transition de la languette d'électrode positive (E21) relié à la zone de connexion de l'électrode positive (28b1), le premier point d'extrémité de transition de la languette d'électrode positive (E21) étant une position où une tangente à la partie de transition de la languette d'électrode positive (28b21) coupe la direction d'extension de la zone de connexion de l'électrode positive (28b1) ; et
l'ensemble d'électrodes (120) comprend en outre une couche isolante (40), ladite couche isolante (40) recouvrant la zone de connexion de l'électrode positive (28b1), et la largeur (H8) de la couche isolante (40) dans la deuxième direction (D2) étant comprise entre 0,5 mm et 2,5 mm.

5. Batterie secondaire (100) selon la revendication 4, dans laquelle la couche de matière active d'électrode négative (16) comprend une deuxième extrémité d'électrode négative (16l) dans la deuxième direction (D2), la couche isolante (40) comprend une première extrémité isolante (40u) dans la première direction (D1), et la plage de la distance (H1) dont la deuxième extrémité de l'électrode négative (16l) dépasse la première extrémité isolante (40u) dans la deuxième direction (D2) est comprise entre 0,5 mm et 1 mm.

6. Batterie secondaire (100) selon la revendication 5, dans laquelle la couche isolante (40) comprend une deuxième extrémité de couche isolante (40l) dans la deuxième direction (D2), et la plage de la distance (H7) dont la deuxième extrémité de la couche isolante (40l) dépasse la deuxième extrémité de l'électrode négative (16l) dans la deuxième direction (D2) est comprise entre 0,5 mm et 1 mm.

7. Batterie secondaire (100) selon la revendication 1, dans laquelle la couche de matière active de l'électrode négative (16) comprend une première extrémité d'électrode négative (16u) dans la première direction (D1), et la plage de la distance (H4) dont la première extrémité du séparateur (122u) dépasse la première extrémité de l'électrode négative (16u) dans la première direction (D1) est comprise entre 0,5 mm et 1,5 mm.

8. Batterie secondaire (100) selon la revendication 4, comprenant en outre :une enveloppe (200), configurée pour loger l'ensemble d'électrodes (120), et comprenant une paroi latérale périphérique (109) et une paroi d'extrémité (111) reliée à une extrémité de la paroi latérale périphérique (109), l'autre extrémité de la paroi latérale périphérique (109) présentant une ouverture (205), une partie de soudage par pression (113) faisant saillie vers l'intérieur est formée sur la paroi latérale périphérique (109) à proximité de l'ouverture (205), et l'ensemble d'électrodes (120) est situé entre la paroi d'extrémité (111) et la partie de soudage par pression (113),dans laquelle la languette d'électrode négative (18b2) est orientée vers l'ouverture (205) et est reliée à l'enveloppe (200) par l'intermédiaire d'une plaque de collecte de courant de l'électrode négative (201), une position de soudage de la plaque de collecte de courant de l'électrode négative (201) et de la paroi latérale périphérique (109) se situant sur un côté de la partie de soudage par pression (113) tourné vers l'ensemble d'électrodes (120) ; et
la Batterie secondaire (100) est une batterie cylindrique.

9. Ensemble de batterie (1002), comprenant la batterie secondaire (100) selon l'une quelconque des revendications 1 à 8.

10. Dispositif électronique (1000), comprenant l'ensemble de batterie (1002) selon la revendication 9.
